# EUROPEAN PATENT APPLICATION

(11) **EP 4 340 480 A1**
(43) Date of publication of application: **20.03.2024**
(21) Application number: 21941184.0
(22) Date of filing: 10.05.2021
(51) Int. Cl.: H04W 72/04

(54) **INFORMATION CONFIGURATION METHOD AND APPARATUS**

(71) Applicant: Beijing Xiaomi Mobile Software Co., Ltd., Beijing 100085 (CN)
(72) Inventor: LIU, Yang, Beijing 100085 (CN)
(74) Representative: Gunzelmann, Rainer
(86) International application number: PCT/CN2021/092850
(87) International publication number: WO 2022/236608

(57) **Abstract**

The present disclosure relates to an information configuration method and apparatus. The information configuration method comprises: acquiring configuration information; and according to the configuration information, updating beam information in a configured grant physical uplink shared channel (CG PUSCH) configuration. According to the present disclosure, a terminal can acquire configuration information, and can update beam information in a CG PUSCH configuration according to the configuration information. Therefore, the terminal can update the beam information according to actual requirements, and can perform uplink transmission on the basis of the updated beam information, thereby avoiding reducing the reliability of uplink transmission due to the use of beam information with an expired configuration.

## Description

### TECHNICAL FIELD

The present disclosure relates to a field of communication technologies, and particularly to a method and an apparatus for information configuration, an electronic device, and a computer-readable storage medium.

### BACKGROUND

Under a CG PUSCH (Configured Grant Physical Uplink Shared Channel) transmission mechanism, a base station does not need to schedule an uplink resource for each uplink transmission of a terminal, and pre-schedules a grant-free uplink transmission resource for the terminal, for example, configures a periodic uplink transmission resource to enable the terminal to automatically perform uplink transmission by using the resource.

In the related art, the base station may configure related parameters of uplink transmission for the terminal through the following two schemes: one is to provide an uplink grant by RRC (Radio Resource Control) signaling that carries all transmission parameters, such as a transmission period, a time offset, a frequency resource, a modulation and coding mode, etc., and the terminal determines that the configuration takes effect immediately after receiving the RRC signaling; the other is to provide a transmission period by RRC, and to implement resource activation by DCI (Downlink Control Information) that carries some transmission parameters, and the terminal determines that the configuration takes effect after receiving an activation command indicated by the DCI.

On the basis of the above CG PUSCH schemes, in order to improve transmission reliability, a multi-TRP (multi-Transmit Receive Point) scheme may be used for transmission. Specifically, the base station may configure a CG PUSCH configuration for the terminal, and the CG PUSCH configuration includes one or more beam information. Therefore, the terminal can determine multiple beam information according to one or more CG PUSCH configurations, and coordinately transmit a same TB (Transport Block) through TRP directions indicated by different beam information at different transmission occasions (TOs), so as to improve transmission reliability through spatial multiplexing.

However, the terminal may move more frequently, or there may be a blocking effect, so that when the terminal subsequently uses the beam information to send the PUSCH, transmission performance is poor and the reliability is not high.

### SUMMARY

In view of this, embodiments of the present disclosure propose a method for information configuration to solve technical problems in the related art.

According to a first aspect of embodiments of the present disclosure, a method for information configuration is provided. The method is performed by a terminal, and includes:
obtaining configuration information; and
updating beam information in a configured grant physical uplink shared channel CG PUSCH configuration according to the configuration information.

According to a second aspect of embodiments of the present disclosure, a method for information configuration is provided. The method is performed by a base station, and includes:
sending configuration information to a terminal; in which the configuration information is used for the terminal to update beam information in a configured grant physical uplink shared channel CG PUSCH configuration.

According to a third aspect of embodiments of the present disclosure, an apparatus for information configuration is provided. The apparatus includes:
an information obtaining module, configured to acquire configuration information; and
an information configuration module, configured to update beam information in a configured grant physical uplink shared channel CG PUSCH configuration according to the configuration information.

According to a fourth aspect of embodiments of the present disclosure, an apparatus for information configuration device is provided. The apparatus includes:
an information sending module, configured to send configuration information to a terminal; in which the configuration information is used for the terminal to update beam information in a configured grant physical uplink shared channel CG PUSCH configuration.

According to a fifth aspect of embodiments of the present disclosure, an electronic device is provided. The device includes:
a processor; and
a memory configured to store processor-executable instructions;
in which the processor is configured to implement the above method for information configuration.

According to a sixth aspect of embodiments of the present disclosure, a computer-readable storage medium is provided. A computer program is stored on the storage medium. When the program is executed by a processor, steps in the above method for information configuration are implemented.

According to the embodiments of the present disclosure, the terminal can obtain the configuration information, and update the beam information in the CG PUSCH configuration according to the configuration information. Thus, the terminal can update the beam information according to actual needs, and perform uplink transmission based on the updated beam information, so as to avoid reducing the reliability of uplink transmission due to the use of expired beam information. At the same time, in the related art, beam information is updated through an RRC reconfiguration of the base station, but in the method of the embodiments, regardless of whether the terminal obtains the configuration information from the base station or the terminal obtains the configuration information from a known configuration, signaling overhead can be greatly reduced, and communication resources are saved.

### BRIEF DESCRIPTION OF THE DRAWINGS

In order to more clearly illustrate technical solutions in embodiments of the present disclosure, the drawings required in the description of the embodiments will be briefly introduced below. Obviously, the drawings in the following description are only some embodiments of the present disclosure. For those skilled in the art, other drawings can also be obtained based on these drawings without any creative effort.
Fig. 1 is a schematic flowchart of a method for information configuration according to embodiments of the present disclosure.
Fig. 2 is a schematic flowchart of another method for information configuration according to embodiments of the present disclosure.
Fig. 3 is a schematic flowchart of another method for information configuration according to embodiments of the present disclosure.
Fig. 4 is a schematic flowchart of another method for information configuration according to embodiments of the present disclosure.
Fig. 5 is a schematic flowchart of another method for information configuration according to embodiments of the present disclosure.
Fig. 6 is a schematic flowchart of another method for information configuration according to embodiments of the present disclosure.
Fig. 7 is a schematic flowchart of another method for information configuration according to embodiments of the present disclosure.
Fig. 8 is a schematic flowchart of another method for information configuration according to embodiments of the present disclosure.
Fig. 9 is a schematic flowchart of another method for information configuration according to embodiments of the present disclosure.
Fig. 10 is a schematic block diagram of an apparatus for information configuration according to embodiments of the present disclosure.
Fig. 11 is a schematic block diagram of another apparatus for information configuration according to embodiments of the present disclosure.
Fig. 12 is a schematic block diagram for information configuration according to embodiments of the present disclosure.
Fig. 13 is another schematic block diagram for information configuration according to embodiments of the present disclosure.

### DETAILED DESCRIPTION

The following will clearly and completely describe technical solutions in embodiments of the present disclosure with reference to the accompanying drawings in the embodiments of the present disclosure. Apparently, the described embodiments are only some of the embodiments of the present disclosure, not all of them. Based on the embodiments in the present disclosure, all other embodiments obtained by those skilled in the art without making creative efforts belong to the protection scope of the present disclosure.

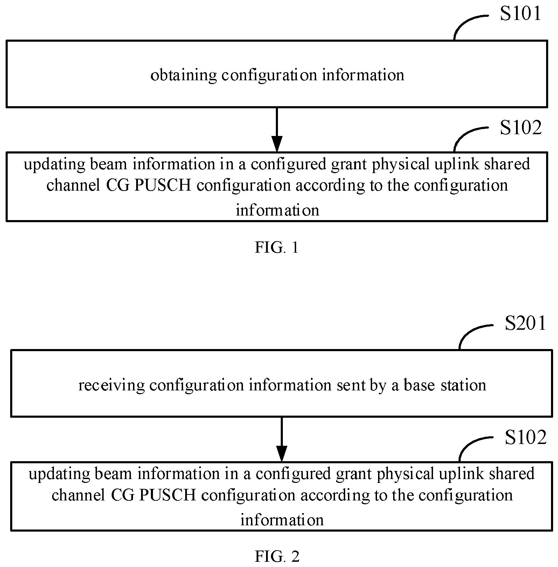

Fig. 1 is a schematic flowchart of a method for information configuration according to an embodiment of the present disclosure. The method for information configuration shown in the embodiments can be applied to a terminal, and the terminal includes but is not limited to an electronic device such as a mobile phone, a tablet computer, a wearable device, a sensor, and an Internet of Things device. The terminal may serve as a user equipment to communicate with a base station, and the base station includes but is not limited to a 4G base station, a 5G base station, and a 6G base station. In an embodiment, the base station may be a base station to which the method for information configuration described in any of the following embodiments applies.

As shown in Figure 1, the method for information configuration may include the following steps.

In step S101, configuration information is obtained.

In step S102, beam information in a configured grant physical uplink shared channel CG PUSCH configuration is updated according to the configuration information.

In an embodiment, the terminal may obtain configuration information, for example, the terminal may receive configuration information sent by a base station, or the terminal may obtain configuration information from known configuration information, in which the known configuration information may include configuration information received or sent by the terminal.

In an embodiment, the configuration information may include related configuration of CG PUSCH, so that the terminal updates the originally configured CG PUSCH according to the configuration information. Further, the configuration information may include beam information, and the beam information may indicate a TRP direction, so that the terminal may update the beam information in the CG PUSCH configuration based on the configuration information, for example, at least one originally configured beam information may be updated to the beam information in the received configuration information.

In an embodiment, the terminal may update beam information in one CG PUSCH configuration, or update beam information in multiple CG PUSCH configurations. Meanwhile, one CG PUSCH configuration may include one beam information, or may include multiple beam information, which is not limited in the embodiment.

According to the embodiments shown in FIG. 1, the terminal can obtain configuration information, and update beam information in the CG PUSCH configuration according to the configuration information. Thus, the terminal can update the beam information according to actual needs, and perform uplink transmission based on the updated beam information, so as to avoid reducing the reliability of uplink transmission due to the use of expired beam information. At the same time, in the related art, beam information is updated through an RRC reconfiguration of the base station, but in the method of the embodiments, regardless of whether the terminal obtains the configuration information from the base station or the terminal obtains the configuration information from a known configuration, signaling overhead can be greatly reduced, and communication resources are saved.

In an embodiment, there may be multiple methods for the terminal to obtain configuration information, which will be described below in combination with specific embodiments.

Fig. 2 is a schematic flowchart of another method for information configuration according to embodiments of the present disclosure. As shown in Figure 2, obtaining the configuration information includes:
in step S201, receiving the configuration information sent by a base station.

In an embodiment, the base station may send configuration information to the terminal. The configuration information is used for the terminal to update the beam information in the configured grant physical uplink shared channel CG PUSCH configuration.

In an embodiment, the terminal may receive configuration information sent by the base station, and update the beam information in the CG PUSCH according to the received configuration information.

In an embodiment, after receiving the configuration information sent by the base station, the terminal may immediately update the beam information in the CG PUSCH, or may delay the update, for example, until a specified trigger condition and the like. For example, when the base station sends the configuration information, it may also send a corresponding specified trigger condition. For example, the specified trigger condition may be a specified duration, or may be a specified threshold based on quality of received signal measured by the terminal. The embodiment is only an exemplary description, not a limitation.

According to the embodiment shown in FIG. 2, the terminal can perform beam information according to an indication of the base station. For uplink transmission of the terminal, the base station can accurately determine current information transmission quality of the terminal according to information reception, so as to determine whether the terminal needs to update the beam information. At the same time, the base station can also determine beam information with best communication quality according to multiple uplink transmissions of the terminal, or the base station can also measure transmission in multiple directions of the terminal. That is, the base station can accurately determine which beam information is more suitable for the terminal to use for uplink transmission. Therefore, the terminal can update the beam information according to the configuration information delivered by the base station, so as to subsequently use more suitable beam information for uplink transmission and improve communication quality.

In an embodiment, the configuration information sent by the base station may include indication information configured to indicate beam information for uplink transmission in at least one TRP (Transmitter Receiver Point) direction. Specifically, the beam information may indicate the direction of uplink transmission, and the terminal may use the direction indicated by the beam information as a TRP direction for uplink transmission. Optionally, the configuration information may only include beam information, or may also include other information, which is not limited in the embodiment.

Based on this, in an embodiment, the terminal may determine at least one beam information according to the configuration information sent by the base station. The direction indicated by each beam information is different, and the terminal may update the beam information in the CG PUSCH configuration according to the beam information. For example, in a case that the configuration information indicates one beam information, the terminal may update one beam information; in a case that the configuration information indicates multiple beam information, the terminal may select several beam information from the multiple beam information to update several beam information.

In an embodiment, the CG PUSCH configuration in the terminal may include one or more beam information. In an embodiment, when updating the beam information in the CG PUSCH configuration, the terminal may update one or more beam information in one or more CG PUSCH configurations.

In an embodiment, the configuration information may be carried by at least one of: GC DCI (Group Common DCI), or MAC-CE (Medium Access Control-Control Element).

For example, the base station may carry configuration information through at least one of GC DCI or MAC-CE, so that the GC DCI and/or MAC-CE sent by the base station may be received by the terminal, and parsed to obtain the configuration information therein.

In an embodiment, in a case that the configuration information is carried by GC DCI, several information indication fields in the GC DCI may indicate the configuration information. For example, the GC DCI independently indicates the configuration information through one information indication field, or jointly indicates the configuration information through codepoint information of one or more information indication fields.

In an example, each information indication field in the GC DCI may respectively indicate different beam information. Take two information indication fields in GC DCI configured to indicate configuration information as an example, a first information indication field is configured to indicate beam information 1, a value of 0 is configured to indicate that the beam information 1 is not included, and a value of 1 is configured to indicate that the beam information 1 is included (that is, beam information in TRP direction 1, the same below, and will not be described in detail later); a second information indication field is configured to indicate beam information 2 (that is, beam information in TRP direction 2, the same below, which will not be described in detail later), a value of 0 is configured to indicate that the beam information 2 is not included, and a value of 1 is configured to indicate that the beam information 2 is included.

In an example, an information indication field in the GC DCI may also jointly indicate multiple beam information, for example, a value of 0 for the information indication field is configured to indicate beam information 1 and beam information 2, and the like.

In an example, multiple information indication fields in the GC DCI may form codepoint information, to jointly indicate beam information. Take two information indication fields in the GC DCI configured to indicate configuration information as an example, a value of the two information indication fields is 00 is configured to indicate beam information 1, a value of 01 is configured to indicate that beam information 2 is included, and a value of 10 is configured to indicate the beam information 1 and beam information 2.

It should be noted that the above information indication field in the GC DCI is just illustration, and in actual application, the indication by be performed through one or more information indication fields, which is not limited in the embodiments.

In an example, the above-mentioned GC-DCI may be an existing GC-DCI, and the base station may use a reserved field in the existing GC-DCI or extend its information indication field to carry configuration information. In another example, the above-mentioned GC-DCI may also be a redefined GC-DCI, and the base station selects several information indication fields in it to carry configuration information.

It should be noted that the GC-DCI may be sent by the base station for several terminals, that is, the base station may configure the configuration information for one or more terminals. For example, the base station may determine several terminals in a cell as a group, and then send the GC-DCI to the terminals in the group respectively, so as to configure multiple terminals at the same time, improving configuration efficiency, and saving communication resources.

In an embodiment, in a case that the configuration information is indicated through MAC-CE, a corresponding method may also be used to indicate the configuration information. For example, one or more bits may be included in the MAC-CE to indicate several beam information, and the specific indication method may refer to GC DCI, which will not be repeated here.

It should be noted that the base station may pre-negotiate with the terminal on a method for indicating configuration information, or may also follow an indication method stipulated in a protocol, so that the terminal can parse the received GC DCI and/or MAC according to the negotiated or stipulated indication method, to determine the beam information.

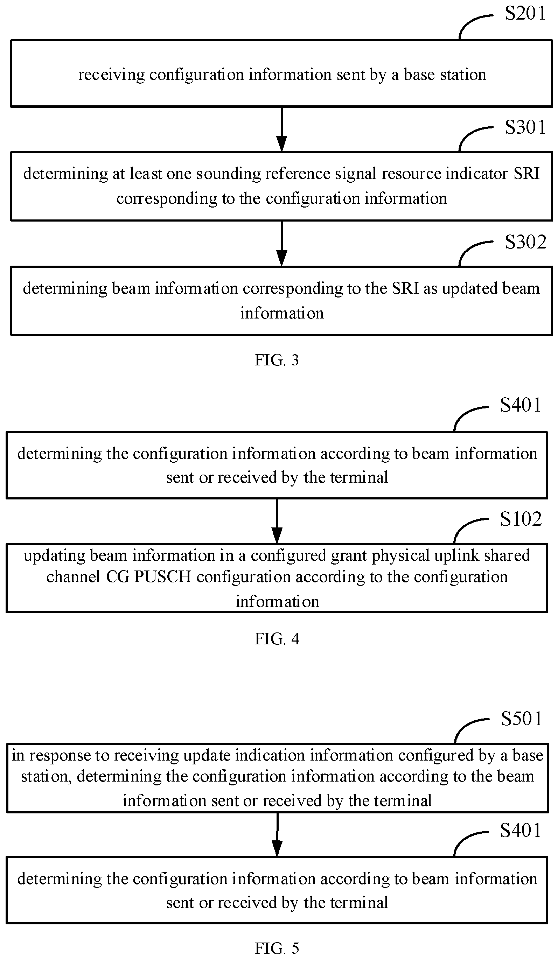

In an embodiment, the configuration information may indicate beam information by carrying SRI (SRS-ResourceIndicator, sounding reference signal resource indicator), which will be specifically described below with reference to FIG. 3.

Fig. 3 is a schematic flowchart of another method for information configuration according to embodiments of the present disclosure. As shown in FIG. 3, updating the beam information in the configured grant physical uplink shared channel CG PUSCH configuration according to the configuration information includes

In step S301, at least one sounding reference signal resource indicator SRI corresponding to the configuration information is determined.

In step S302, beam information corresponding to the SRI is determined as updated beam information.

In an embodiment, the configuration information sent by the base station may correspond to one or more SRIs. The SRI is indication information of SRS (Sounding Reference Signal) resource, and corresponds to at least one SRS resource.

In an example, the SRI may correspond to one or more SRS resource sets, and at the same time, the SRS resource set may also include one or more SRS resources, so the SRI may indicate one or more SRS resources in the SRS resource set. For example, one SRI may indicate one SRS resource in one SRS resource set, or one SRI may indicate multiple SRS resources in one SRS resource set, or one SRI may indicate one or more SRS resources in multiple SRS resource sets, etc. The embodiment does not limit the method for indicating the SRS resource by the SRI.

In an embodiment, one SRS resource may correspond to one beam information. Thus, after determining one or more SRS resources corresponding to one or more SRIs, the terminal may determine beam information corresponding to the SRS resource respectively. For convenience of description, the beam information may be referred to as beam information corresponding to the SRI. Therefore, the terminal can use the beam information corresponding to the SRI as the updated beam information, so as to implement the update of the beam information.

Fig. 4 is a schematic flowchart of another method for information configuration according to an embodiment of the present disclosure. As shown in Figure 4, obtaining the configuration information includes:
in step S401, determining the configuration information according to beam information sent or received by the terminal.

In an embodiment, the terminal may not separately receive configuration information sent by the base station, but may determine the configuration information according to known beam information, for example, determine the configuration information according to the sent or received beam information.

In an example, the terminal may determine whether to update the beam information in the CG PUSCH configuration according to an indication of the base station or according to a preset trigger condition. When it is determined that the update needs to be performed, the configuration information is determined according to the historically sent or received beam information, and then the beam information in the CG PUSCH configuration is updated according to the configuration information.

The indication of the base station may be identification information delivered by the base station, which can reduce communication overhead compared with the completed configuration information delivered by the base station. The preset trigger condition may be pre-negotiated between the base station and the terminal, or determined by the terminal according to the protocol, or determined by the base station itself. For example, the trigger condition may include an update cycle, for example, the terminal determines that an update is required when the cycle time is reached; or may include whether communication quality meets a preset threshold, for example, the terminal determines that an update is required when it determines that the communication quality does not meet the preset threshold.

According to the embodiments shown in Figure 4, the terminal can update the beam information according to the beam information historically received or sent by the device, which reduces the dependence on a network side device (such as base stations or other network side devices), which, on the one hand, can improve the efficiency of beam information update and reduce communication overhead, and on the other hand, can avoid the inability to receive the configuration information delivered by the base station due to the poor communication quality with the base station and then the failure of updating.

In an embodiment, the terminal determines the configuration information according to the sent or received beam information, and may select beam information within a specified time threshold. For example, the terminal may determine the configuration information from beam information sent or received by the terminal within a time period from a specified timing before the current timing to the current time. Generally, the specified timing before the current time should be later than a configuration time of a CG PUSCH configuration currently used by the terminal, so that the terminal can avoid selecting beam information configured relatively recently.

In an embodiment, the terminal may combine the methods in the embodiments in FIG. 2 and FIG. 4. For example, when the terminal determines that the beam information needs to be updated, it may first adopt the method shown in the embodiments in Figure 2, that is, receive the configuration information sent by the base station, and update the beam information based on the configuration information sent by the base station. In response to not receiving the configuration information sent by the base station in a specified time period, the terminal may adopt the method shown in the embodiments in FIG. 4, that is, update according to the sent or received beam information.

Fig. 5 is a schematic flowchart of another method for information configuration according to an embodiment of the present disclosure. As shown in FIG. 5, determining the configuration information according to the beam information sent or received by the terminal includes:
in step S501, in response to receiving update indication information configured by the base station, the configuration information is determined according to the beam information sent or received by the terminal.

In an embodiment, the base station may deliver the update indication information to the terminal, for example, the base station may carry the update indication information through RRC signaling.

In an embodiment, the update indication information may indicate that the terminal is allowed to determine the configuration information according to the sent or received beam information. For example, the terminal may determine that the configuration information can be determined according to the sent or received beam information when receiving the update indication information; or the terminal may determine, according to specific information in the update indication information, whether it can or cannot determine the configuration information according to the sent or received beam information.

In an embodiment, the update indication information may trigger the terminal to determine the configuration information according to the sent or received beam information. For example, when receiving the update indication information, the terminal may determine to determine the configuration information according to the sent or received beam information immediately or after a delay.

It should be noted that the above update indication information is only an example. In practical applications, the terminal can also determine the configuration information according to the sent or received beam information by default, or cannot determine the configuration information according to the sent or received beam information by default. etc., which are not limited in the embodiments.

In an embodiment, the beam information sent or received by the terminal includes at least one of:
configured beam information for scheduling transmission; configured beam information for uplink channel for scheduling-free transmission; measured and reported beam information for coordinated transmission; beam information in at least one CG PUSCH configuration that the base station has configured for the terminal, in which each CG PUSCH configuration includes at least one beam information.

Thus, the terminal can update the beam information in the CG PUSCH configuration according to the above described at least one sent or received beam information.

In an embodiment, in a case that the beam information sent or received by the terminal includes configured beam information for scheduling transmission, the configured beam information for scheduling transmission may be determined according to a beam consistency capability of the terminal.

For the beam consistency capability, in a case that the terminal can determine the uplink transmission beam according to a measurement result of a downlink beam of the terminal, or the terminal can determine the downlink reception beam of the terminal according to a measurement result of an uplink beam of the terminal, then the terminal is considered to have the beam consistency capability. Generally, the base station usually also needs to support characteristic indication information related to the beam consistency of the terminal.

In an example, in a case that the terminal has the beam consistency capability, that is, beam correspondence is established, the configured beam information for scheduling transmission includes at least one of beam information for uplink transmission and beam information for downlink transmission.

It should be noted that in a case that the terminal has the beam consistency capability, the terminal can determine the beam information used for downlink transmission as used for uplink transmission, that is, a TRP receiving direction indicated by the beam information is used as a TRP sending direction, thus, the terminal can update the beam information in the CG PUSCH configuration according to the configured beam information for scheduling transmission that includes at least one of the beam information for uplink transmission and the beam information for downlink transmission.

In an example, in a case that the terminal does not have the beam consistency capability, that is, beam correspondence does not hold, the configured beam information for scheduling transmission only includes beam information for uplink transmission.

It should be noted that in a case that the terminal has the beam consistency capability, the terminal generally cannot determine the beam information used for downlink transmission as used for uplink transmission, for example, the measurement result of the downlink beam cannot indicate the uplink transmission quality of the uplink transmission beam. Thus, in order to ensure the accuracy of updating the beam information, the terminal may update the beam information in the CG PUSCH configuration only according to the beam information used for uplink transmission.

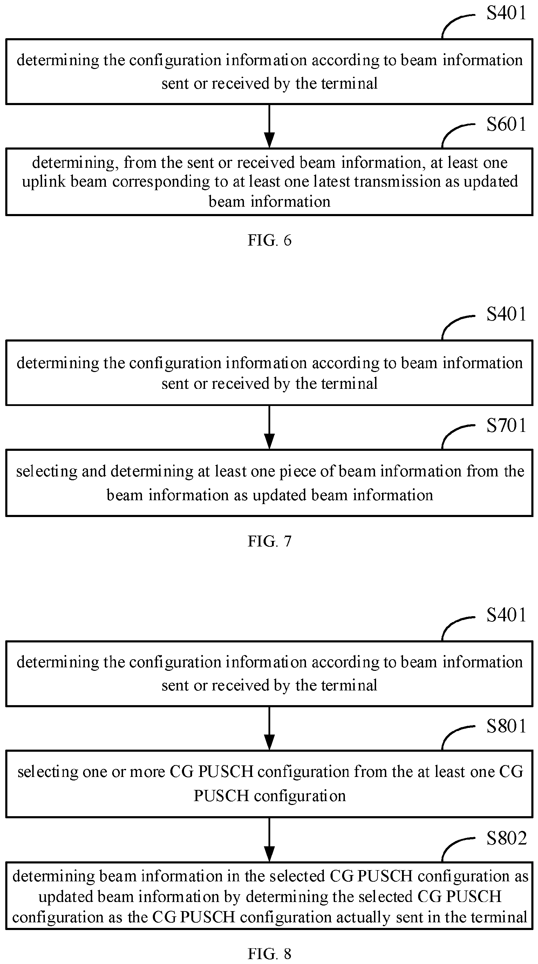

Fig. 6 is a schematic flowchart of another method for information configuration according to embodiments of the present disclosure. In the embodiments shown in FIG. 6, as shown in FIG. 6, the method includes:
in step S601, determining, from the sent or received beam information, at least one uplink beam corresponding to at least one latest transmission as updated beam information.

In an embodiment, the beam information sent or received by the terminal includes: at least one of the configured beam information for scheduling transmission or the configured beam information for the uplink channel for scheduling-free transmission. In this case, the uplink beam corresponding to the latest transmission may be selected as the updated beam information.

In an example, the latest transmission may correspond to one or more uplink beams, and the terminal may select the uplink beam corresponding to the latest one or more uplink transmissions for updating. For example, the terminal may determine according to the beam information that needs to be updated. For example, the terminal may first select the uplink beams corresponding to the latest transmissions, and in a case that the number of uplink beams corresponding to the latest transmissions is less than the beam information that needs to be updated, then select an uplink beam corresponding to a previous transmission.

In an example, the at least one latest transmission may include uplink transmission and/or downlink transmission. For the downlink transmission, the downlink transmission corresponds to a downlink beam, and a TRP direction indicated by the downlink beam may be used as a direction of uplink transmission, so as to determine the uplink beam corresponding to the downlink transmission.

In an example, in order to improve the accuracy of updating beam information by the terminal, in a case that the terminal has the beam consistency capability, the at least one latest transmission may include uplink transmission and/or downlink transmission; in a case that the terminal does not have the beam consistency capability, the at least one latest transmission may only include uplink transmission.

Alternatively, even if the terminal does not have the beam consistency capability, at least one latest transmission may include uplink transmission and/or downlink transmission. Although the accuracy may be reduced, the error can be ignored to ensure the timeliness of beam information update.

In an embodiment, the terminal selects the uplink beam corresponding to the latest transmission, and may report the updated beam information to the base station after updating the beam information, so that the base station can receive adaptively. Alternatively, the terminal may not report the updated beam information, and the base station may determine by itself the beam information latest transmitted by the terminal among the beam information configured for the terminal for scheduling transmission and/or the beam information for the uplink channel for scheduling-free transmission, so that the base station can directly determine the updated beam information of the terminal, thereby reducing signaling overhead.

It should be noted that the above-mentioned directly determining the updated beam of the terminal by the base station generally requires to predefine rules for updating the beam information by the terminal. That is, the base station can know that the terminal is suitable for updating the beam information according to the predefined rules. For example, the terminal periodically updates the beam information, and the base station can determine that the terminal performs beam information update when the period time is reached, so that the base station can directly determine the updated beam information of the terminal.

Fig. 7 is a schematic flowchart of another method for information configuration according to embodiments of the present disclosure. As shown in FIG. 7, updating the beam information in the configured grant physical uplink shared channel CG PUSCH configuration according to the configuration information, includes:
in step S701, at least one beam information is selected from the beam information and is determined as updated beam information.

In an embodiment, the beam information sent or received by the terminal includes the measured and reported beam information for coordinated transmission.

For example, the beam information for coordinated transmission measured and reported by the terminal may be a beam pair, for example, a beam pair consisting of a beam sent by the base station and a beam received by the terminal.

In an embodiment, the terminal may determine uplink beam corresponding to the beam received by the terminal in the beam pair, regardless of whether the beam consistence is established. That is, a TRP direction indicated by the received beam is taken as a direction of uplink transmission, and the beam information is updated according to the uplink beam.

According to the embodiments shown in FIG. 7, the terminal can use the measured and reported beam information as alternative beam information, and then select at least one of them to update the beam information, so that the terminal can flexibly perform self-updating without receiving the configuration of the base station, ensuring the timeliness of beam information update.

Fig. 8 is a schematic flowchart of another method for information configuration according to an embodiment of the present disclosure. As shown in FIG. 8, updating the beam information in the configured grant physical uplink shared channel CG PUSCH configuration according to the configuration information, includes:
In step S801, one or more CG PUSCH configurations are selected from the at least one CG PUSCH configuration.
In step S802, the selected CG PUSCH configuration is determined as a CG PUSCH configuration actually transmitted in the terminal, and beam indication information in the selected CG PUSCH configuration is determined as updated beam information.

In an embodiment, beam indication information sent or received by the terminal includes the beam information in the at least one CG PUSCH configuration that the base station has configured for the terminal.

In an embodiment, the base station may send at least one CG PUSCH configuration to the terminal in advance, and each CG PUSCH configuration includes different beam information, or includes different beam information combinations, or it can also be said that beam information included in each CG PUSCH configuration is not identical.

For example, each CG PUSCH configuration may include one beam information, for example, a CG PUSCH configuration 1 includes beam information 1, a CG PUSCH configuration 2 includes beam information 2, and a CG PUSCH configuration 3 includes beam information 3. Alternatively, each CG PUSCH configuration may include multiple beam information (which can be called beam information combination), for example, a CG PUSCH configuration 1 includes beam information 1 and beam information 2, a CG PUSCH configuration 2 includes only beam information 1, and a CG PUSCH configuration 2 includes beam Information 2 and beam Information 3.

In an embodiment, the terminal may select at least one of the CG PUSCH configurations previously sent by the base station. For example, the terminal may perform selection according to the beam information in the CG PUSCH configuration. For example, the terminal may select beam information according to a measurement result of the received beam, so as to select the CG PUSCH configuration including the beam information.

In an embodiment, the terminal may determine the selected CG PUSCH configuration as the CG PUSCH actually used by the terminal, that is, the selected CG PUSCH configuration is activated to implement update of beam information.

According to the embodiments shown in FIG. 8, the terminal can use the beam information in at least one CG PUSCH configuration that the base station has configured for the terminal as candidate beam information, and then select at least one of them to update the beam information, so that the terminal can flexibly perform the self-update in response to not receiving the configuration of the base station, which ensures the timeliness of beam information update.

In an embodiment, the terminal can not only update the beam information through the above-mentioned pre-transmitted CG PUSCH configuration, but also select at least one CG PUSCH configuration from the at least one CG PUSCH configuration when configuring the beam information for the first time, and the selected CG PUSCH configuration is determined as the CG PUSCH configuration actually used in the terminal.

In an embodiment, after the first beam information of the terminal, since the terminal selects the CG PUSCH configuration by itself instead of being configured by the base station, the terminal can also send the beam information in the selected CG PUSCH configuration to the base station, so that the base station can perform adaptive reception.

It should be noted that the above method for configuring the beam information for the first time is just an example, and the terminal may also configure beam information by other methods, and then update beam information based on the pre-transmitted CG PUSCH configuration, which is not limited in the embodiments.

In an embodiment, the base station sends at least one CG PUSCH configuration to the terminal in advance, and beam information in each CG PUSCH configuration is different, and other transmission parameter configurations are the same. That is to say, when the terminal updates the beam information by updating the CG PUSCH configuration, it can ensure that other transmission parameter configurations remain unchanged, thereby avoiding transmission abnormalities due to changes of the transmission parameters.

In an embodiment, after updating the beam information, the terminal may send the updated beam information to the base station. For example, after the terminal updates the beam information based on the measured and reported beam information for coordinated transmission, it can send the updated beam information to the base station. Alternatively, after updating the beam information according to the multiple CG PUSCH configurations pre-configured by the base station, the terminal can send the updated beam information to the base station.

In this way, the base station can know the updated beam information of the terminal, that is, determine a TRP direction for the terminal to perform uplink transmission, so that the base station can adaptively receive information and improve the reliability of information transmission.

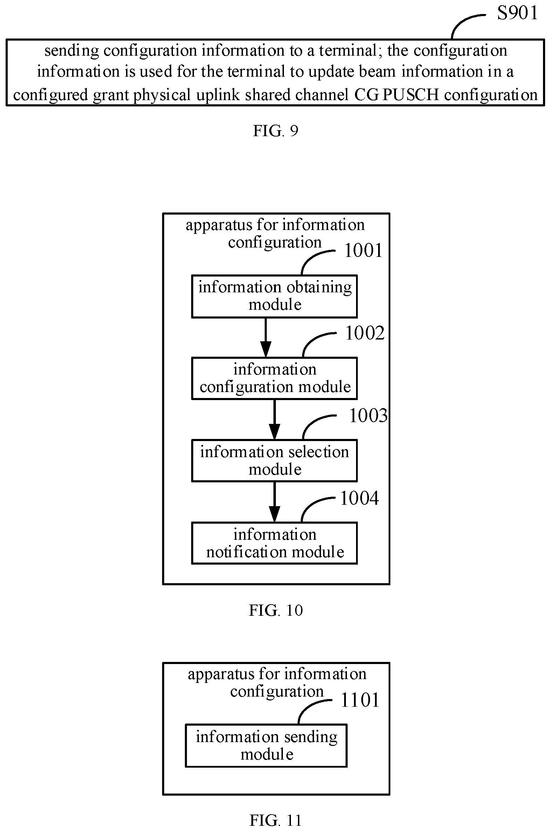

Fig. 9 is a schematic flowchart of a method for information configuration according to embodiments of the present disclosure. The method for information configuration shown in the embodiments can be applied to a base station, and the base station includes but is not limited to a 4G base station, a 5G base station, and a 6G base station. The base station may communicate with a terminal serving as a user equipment, and the terminal includes but is not limited to a mobile phone, a tablet computer, a wearable device, a sensor, an Internet of Things device and other electronic devices. In an embodiment, the terminal may be a terminal to which the method for information configuration described in any of the foregoing embodiments is applicable.

As shown in Figure 9, the method for information configuration may include the following steps.

In step S901, configuration information is sent to a terminal, in which the configuration information is used for the terminal to update beam information in a configured grant physical uplink shared channel CG PUSCH configuration.

In an embodiment, the base station may send the configuration information to the terminal, so that after receiving the configuration information, the terminal may update the beam information in the CG PUSCH configuration according to the configuration information.

According to the embodiments shown in FIG. 9, the base station can send configuration information configured to indicate beam information to the terminal, so that the terminal can update the beam information in the CG PUSCH configuration according to the configuration information. Thus, the terminal can update the beam information according to actual needs, and perform uplink transmission based on the updated beam information, so as to ensure the reliability of the uplink transmission between the terminal and the base station.

In an example, the base station may determine whether to send configuration information according to a reception quality of the terminal. For example, in a case that the reception quality is lower than a preset threshold, the base station may send configuration information to the terminal to indicate the terminal to update beam information.

In an example, the base station may determine the configuration information according to the reception quality of multiple TRP directions of the terminal.

For example, the configuration information includes indication information configured to indicate beam information for uplink transmission in at least one TRP direction. The base station receives information or reference signals in multiple TRP directions of the terminal to determine at least one TRP direction with reception quality higher than a preset threshold, then determines beam information indicating the at least one TRP direction, and sends the configuration information carried the beam information to the terminal.

In an embodiment, the terminal may indicate through at least one of downlink control information DCI and medium access control-control element MAC-CE. The specific indication method may refer to the embodiments of the terminal side, which will not be repeated here.

In an embodiment, the configuration information may correspond to at least one sounding reference signal resource indicator SRI. The SRI is used for the terminal to determine beam information corresponding to the SRI as updated beam information. Here, the method for determining the beam information corresponding to the SRI can refer to the embodiments of the terminal side, which will not be repeated here.

Corresponding to the foregoing embodiments of the method for information configuration, the present disclosure also provides embodiments of an apparatus for information configuration.

Fig. 10 is a schematic flowchart of an apparatus for information configuration according to embodiments of the present disclosure. The apparatus for information configuration shown in the embodiments can be applied to a terminal, and the terminal includes but is not limited to a mobile phone, a tablet computer, a wearable device, a sensor, an Internet of Things device and other electronic devices. The terminal may serve as a user equipment to communicate with a base station, and the base station includes but is not limited to a 4G base station, a 5G base station, and a 6G base station. In an embodiment, the base station may be a base station to which the apparatus for information configuration described in any of the subsequent embodiments is applicable.

As shown in Figure 10, the apparatus for information configuration may include:
an information obtaining module 1001, configured to obtain configuration information;
an information configuration module 1002, configured to update beam information in a configured grant physical uplink shared channel CG PUSCH configuration according to the configuration information.

In an embodiment, the information obtaining module 1001 is specifically configured to receive configuration information sent by a base station.

In an embodiment, the configuration information includes indication information configured to indicate beam information for uplink transmission in at least one transmit receive point TRP direction.

In an embodiment, the configuration information is carried by at least one of: group common downlink control information GC DCI, or medium access control-control element MAC-CE.

In an embodiment, in a case that the configuration information is indicated by the GC DCI, the GC DCI independently indicates the configuration information through one information indication field, or jointly indicates the configuration information through codepoint information of one or more information indication fields.

In an embodiment, the information configuration module 1002 is specifically configured to: determine at least one sounding reference signal resource indicator SRI corresponding to the configuration information; and determine beam information corresponding to the SRI as updated beam information.

In an embodiment, the information obtaining module 1001 is specifically configured to: determine the configuration information according to beam information sent or received by the terminal.

In an embodiment, the information configuration module 1002 is specifically configured to: determine the configuration information according to the beam information sent or received by the terminal, in response to receiving update indication information configured by a base station.

In an embodiment, the beam information sent or received by the terminal includes at least one of:
configured beam information for scheduling transmission; configured beam information for an uplink channel for scheduling-free transmission; measured and reported beam information for coordinated transmission; or beam information in at least one CG PUSCH configuration that the base station has configured for the terminal, in which each CG PUSCH configuration includes at least one beam information.

In an embodiment, the beam information sent or received by the terminal includes the configured beam information for scheduling transmission, and the information configuration module 1002 is specifically configured to: in a case that the terminal has a beam consistency capability, the configured beam information for scheduling transmission includes at least one of beam information for uplink transmission or beam information for downlink transmission; or in a case that the terminal does not have the beam consistency capability, the configured beam information for scheduling transmission only includes beam information for uplink transmission.

In an embodiment, the information configuration module 1002 is specifically configured to: determine, from the sent or received beam information, at least one uplink beam corresponding to at least one latest transmission as updated beam information, in which the beam information sent or received by the terminal includes at least one of the configured beam information for scheduling transmission or the configured beam information for the uplink channel for scheduling-free transmission.

In an embodiment, the information configuration module 1002 is specifically configured to: select and determine at least one piece of beam information from the beam information as updated beam information, in which the beam information sent or received by the terminal includes the measured and reported beam information for coordinated transmission.

In an embodiment, the information configuration module 1002 is specifically configured to: select one or more CG PUSCH configurations from the at least one CG PUSCH configuration; and determine the selected CG PUSCH configuration as a CG PUSCH configuration actually used in the terminal, and determine beam information in the selected CG PUSCH configuration as updated beam information, in which beam indication information sent or received by the terminal includes the beam information in the at least one CG PUSCH configuration that the base station has configured for the terminal.

In an embodiment, the apparatus further includes:
an information selection module 1003, configured to select at least one CG PUSCH configuration from the at least one CG PUSCH configuration; and determine the selected CG PUSCH configuration as the CG PUSCH configuration actually used in the terminal.

In an embodiment, in the at least one CG PUSCH configuration, beam information is different, and other transmission parameter configurations are the same.

In an embodiment, the apparatus also includes:
an information notification module 1004, configured to send the selected or updated one or more CG PUSCH configurations or corresponding beam information to the base station.

Fig. 11 is a schematic flowchart of another apparatus for information configuration according to embodiments of the present disclosure. The apparatus for information configuration shown in the embodiments may be applicable to a base station, and the base station includes but is not limited to a 4G base station, a 5G base station, and a 6G base station. The base station may communicate with a terminal serving as a user equipment, and the terminal includes but is not limited to a mobile phone, a tablet computer, a wearable device, a sensor, an Internet of Things device and other electronic devices. In an embodiment, the terminal may be a terminal to which the apparatus for information configuration described in any of the foregoing embodiments is applicable.

As shown in Figure 11, the information configuration device may include:
an information sending module 1101, configured to send configuration information to a terminal; the configuration information is used for the terminal to update beam information in a configured grant physical uplink shared channel CG PUSCH configuration.

In an embodiment, the configuration information includes indication information configured to indicate beam information for uplink transmission in at least one TRP direction.

In an embodiment, the configuration information is carried by at least one of: downlink control information DCI, or medium access control-control element MAC-CE.

In an embodiment, the configuration information corresponds to at least one sounding reference signal resource indicator SRI; the SRI is used for the terminal to determine beam information corresponding to the SRI as updated beam information.

With regard to the apparatus in the above embodiments, the specific manner in which each module executes operations has been described in detail in the embodiments of related methods, and will not be described in detail here.

As for the apparatus embodiments, since they basically correspond to the method embodiments, for related parts, please refer to the part description of the method embodiments. The apparatus embodiments described above are only illustrative, and the modules described as separate components may or may not be physically separated, and the components shown as modules may or may not be physical modules, that is, they may be located in one place, or may be distributed to multiple network modules. Part or all of the modules can be selected according to actual needs to achieve the purpose of the solution of the embodiments. It can be understood and implemented by those skilled in the art without creative effort.

In the following, specific embodiments of the method for information configuration in the present disclosure will be introduced in combination with specific technical details.

The application of multiple TRP (transmit receive point)/PANELs antenna panels in the base station is mainly to improve a coverage at an edge of a cell, provide a more balanced service quality in a service area, and use different methods to coordinately transmit data between multiple TRP/PANELs. From the perspective of network form, network deployment with a large number of distributed access points and centralized baseband processing will be more conducive to providing a balanced user experience rate and significantly reducing the delay and signaling overhead caused by handover. Utilizing coordination between multiple TRPs or panels, the channel is transmitted/received from multiple beams of multiple angles, which can better overcome various occlusion/blocking effects, ensure the robustness of the link connection, and is suitable for a URLLC service to improve transmission quality and meet reliability requirements.

In the research stage of R16, based on the application of the coordinated multi-point transmission technology among downlink multiple TRP/PANELs, transmission of PDSCH is enhanced. Since the data transmission includes scheduling feedbacks of the uplink and downlink channels, in the research of URLLC, only enhancing the downlink data channel cannot guarantee the service performance. Therefore, in the research of R17, a downlink control channel PDCCH, an uplink control channel PUCCH and data channel PUSCH are continuously enhanced.

An uplink enhancement scheme based on multi-TRP in R17 is mainly based on the PUSCH repetition scheme in R16. First, an uplink transmission scheme of R16 is introduced. For a scheduling grant PUSCH, a repetition type A mode between slots and a repetition type B mode that can be transmitted across slots are supported. Scheduling and scheduling-free PUSCH transmissions are introduced respectively below.

For the scheduling PUSCH, there are mainly two uplink PUSCH time-domain repetition enhancement methods: a repetition type A transmission mode and a repetition type B transmission mode introduced in R16.

### 1) PUSCH repetition type A transmission mode

Rel-16's Slot Aggregation PUSCH transmission is not suitable for some situations that require very low delay and high reliability. A PUSCH is transmitted in consecutive K slots, that is, K transmission occasions, and the transmission starts on an S-th symbol in an initial slot, and each transmission occasion lasts for L symbols, and S+L does not exceed the slot boundary;

### 2) PUSCH repetition type B transmission mode

In order to reduce delay and improve reliability, Rel-16 supports the PUSCH repetition scheme with Mini-slot as the unit, and allows PUSCH transmission across slots to further reduce delay. In a time domain, a PUSCH starts to transmit on an S-th symbol in an initial slot, and continuously sends K transmission occasions, and each transmission occasion occupies L symbols back-to-back, the transmission S+L can cross the slot boundary. In a case that a transmission occasion crosses a slot boundary, the transmission is re-segmented. For the entire transmission, the slot L*K represents a time window length for PUSCH transmission, and DL symbols and other invalid symbols will be discarded and not used for PUSCH transmission.

The type A and type B transmission parameters are defined as shown in Table 1:

**Table 1**

| **PUSCH mapping type** | **Normal cyclic prefix** | | | **Extended cyclic prefix** | | |
|---|---|---|---|---|---|---|
| | ***S*** | ***L*** | ***S+L*** | ***S*** | ***L*** | ***S*+*L*** |
| Type A (repetition Type A only) | 0 | {4,...,14} | {4,...,14} | 0 | {4,...,12} | {4,...,12} |
| Type B | {0,...,13} | {1,...,14} | {1,...,14} for repetition Type A, {1,...,27} for repetition Type B | {0,..., 11} | {1,...,12} | {1,...,12} for repetition Type A, {1,...,23 } for repetition Type B |

RV version definitions are shown in Table 2:

**Table 2**

| ***rv_{id}* indicated by the DCI scheduling the PUSCH** | ***rv_{id}* to be applied to *n*^{th} transmission occasion (repetition Type A) or *n*^{th} actual repetition (repetition Type B)** | | | |
|---|---|---|---|---|
| | ***n* mod 4 = 0** | ***n* mod 4 = 1** | ***n* mod 4 = 2** | ***n* mod 4 = 3** |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

Corresponding to the PUSCH repetition type A, the RV mapping is directly mapped to the transmission occasions corresponding to all normal repetitions, and the RV field in the DCI indicates the initial value of the RV sequence.

Corresponding to the PUSCH repetition type B, the RV mapping is directly mapped to the transmission occasions corresponding to all actual repetitions, and the RV field in the DCI indicates the initial value of the RV sequence.

CG PUSCH grant-free PUSCH transmission supports two scheduling-free schemes in the uplink, the difference lies in activation methods:
Configured grant type 1 (Type 1): the RRC provides an uplink grant, including grant activation; once RRC configuration is received correctly, it will take effect immediately. All transmission parameters are configured through RRC signaling, including period, time offset and frequency resources, as well as a modulation and coding mode used for uplink transmission. After receiving the RRC configuration, at the moment given by the period and offset, the terminal starts to transmit using the configured grant. The offset is to control at what moment the terminal is allowed to transmit.
Configured grant type 2 (Type 2): the RRC provides a transmission period, and the base station implements resource activation and configuration of some transmission parameters through DCI, so as to realize the activation transmission of the grant configuration; after the terminal receives the activation command, in a case that there is data to be sent in a buffer, the transmission will be performed according to the pre-configured cycle, in a case that there is no data, the terminal will not transmit any data. An activation time is specified when the PDCCH is sent. The terminal determines the activation/deactivation configured grant type 2 by sending MAC control signaling in the uplink.

These two configured grant transmission schemes can be respectively applied to the repetition type A and the repetition type B in the related art. The advantage is that the overhead of control signaling is reduced, and the delay before uplink data transmission is reduced to a certain extent, because there is no need to schedule a process of requesting grant before data transmission.

In the R17 multi-TRP enhancement, PUSCH supports coordinated transmission of a same transmission block TB in different TRP directions on different transmission occasions (TOs) in the above-defined transmission mode, so as to further apply spatial multiplexing transmission to improve transmission reliability.

In a standardization discussion of R17, for multi-TRP-based CG PUSCH transmission, two ways can be considered for jointly coordinated transmission in multi-TRP direction, which are respectively:
A first way: the same TB is sent in different TRP directions through a single CG PUSCH configuration, that is, in a same set K transmissions, different groups of TO are used to transmit PUSCH for different TRPs, which group of TO is used is determined by a beam mapping mode;

There are multiple mapping schemes that can be considered for a mapping relationship between a beam transmission direction of the PUCCH/PUSCH sent by the terminal for different TRPs and different transmission occasions. The following examples are three typical beam mapping schemes:
Scheme a: periodic mapping. Two beam directions are cyclically mapped to configured multiple transmission occasions in turn. For example, when there are 4 transmissions, a beam direction mapping pattern is #1#2#1#2;
Scheme b: continuous mapping. Two beam directions are continuously mapped to multiple configured transmission occasions. For example, when there are 4 transmissions, a beam direction mapping pattern is #1#1#2#2. For more than 4 transmissions, the pattern is repeated, such as for 8 transmissions, a TCI state mapping pattern is #1#1#2#2#1#1#2#2;
Scheme c: Bihalf mapping. Two beam directions are continuously mapped to multiple configured transmission occasions. For example, when there are 8 transmissions, a beam direction mapping pattern is #1#1#1#1#2#2#2#2;
A second way: the same TB is sent to different TRP directions through multiple CG PUSCH configurations, that is, different groups of TOs are applied to different CG PUSCH configurations to send PUSCH for different TRPs, and the different beam directions used can be specified by RRC or determined by activation DCI signaling.

In an R17 uplink enhancement, for CG PUSCH configuration transmission, it also needs to consider how to use multi-TRP to improve transmission reliability. For the CG PUSCH of Type 1 and Type 2, it is determined that enhancement is needed, so it needs to consider how to determine and optimize relevant transmission parameters and transmission mechanism under a scheduling-free mechanism.

For a current CG PUSCH, the parameter configuration is RRC configuration or obtained by RRC+DCI indication. Due to the movement or occlusion effect of the UE, a configured beam cannot be applied to the current or subsequent CG PUSCH. The beam information of CG PUSCH can only be can only be updated through RRC reconfiguration, which will lead to the degradation of the transmission service performance of the terminal. Especially under FR2, the signaling overhead of the beam update method also needs to be considered to save system signaling overhead, and at the same time the terminal beam measurement and reporting also needs to be minimized, to reduce terminal power consumption. Therefore, the beam mechanism for CG PUSCH needs to be enhanced.

In an embodiment, the multi-TRP-based CG PUSCH application beam enhancement scheme is as follows, which is applicable to CG PUSCH type 1 and type 2:
Method 1: the beam information of CG PUSCH is updated through base station configuration.

Alt. 1: A GC DCI that is newly defined or redefined and extended, i.e., group common DCI is used to indicate to update an SRI (srs-ResourceIndicator) used for 1 or 2 SRS resource sets associated with a single CG PUSCH config, i.e., beam indication information that is used;
Optionally, the group common DCI may independently indicate the SRI, or jointly indicate an SRI codepoint.

Alt.2: Spatial relation info corresponding to the SRI beam indication information of the CG PUSCH (respectively and independently corresponding to one or two SRS resource sets) is updated through MAC-CE.

Method 2: the terminal can update by itself the beam information of CG PUSCH by default.

First, optionally, the base station configures through the RRC whether the terminal can use other new sending/receiving channels or beam direction information of the new CG config.

In a case that a beam correspondence is established, uplink/downlink multl-TRP is used to receive information.

In a case that the beam correspondence does not hold, the uplink beam information is used.

### Secondly:

### Method 2-1:

the UE may apply other beam direction information updated in other sending times in a predefined manner by default. When the UE has other uplink transmissions within the defined time threshold (it can be a scheduling PUSCH/PUCCH channel, or an updated CG PUSCH configuration), the UE is allowed to use the latest transmission beam information to send the CG PUSCH configuration. Predefined rules can ensure that the base station determines the beam information.

### Method 2-2:

The base station measures and reports a combination of multiple Tx-Rx beam pairs that can be used for multi-TRP coordinated transmission through the UE. The terminal selects one beam pair and notifies the base station of the selected beam information, for example, reports the beam sent by the UE, or reports the beam received by the UE, etc.

Alternatively, the base station configures multiple CG PUSCH configs at the same time. That is, the base station configures multiple CG PUSCH configs with different beam transmission combination configurations and other transmission parameter configurations being the same, for the terminal's transmission selection, and the terminal independently selects a result and notifies the base station of the selected result at the same time.

According to the above-mentioned embodiments, for the configuration of CG PUSCH, the enhancement scheme, for considering to update the relevant beam information after possible beam changes, enhances the system uplink transmission performance and minimizes system signaling overhead.

Embodiments of the present disclosure also provide an electronic device, including:
a processor; and
a memory configured to store processor-executable instructions;

The processor is configured to implement the above method for information configuration.

Embodiments of the present disclosure also provide a computer-readable storage medium on which a computer program is stored, and when the program is executed by a processor, the steps in the above method for information configuration are realized.

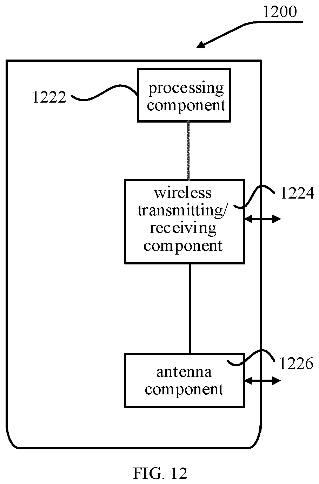

As shown in FIG. 12, FIG. 12 is a schematic block diagram of an apparatus 1200 for information configuration according to embodiments of the present disclosure. The apparatus 1200 may be provided as a base station. Referring to FIG. 12, the apparatus 1200 includes a processing component 1222, a wireless transmitting/receiving component 1224, an antenna component 1226, and a signal processing part specific to a wireless interface. The processing component 1222 may further include one or more processors. One of the processors in the processing component 1222 may be configured to implement the method for information configuration described in any of the foregoing embodiments.

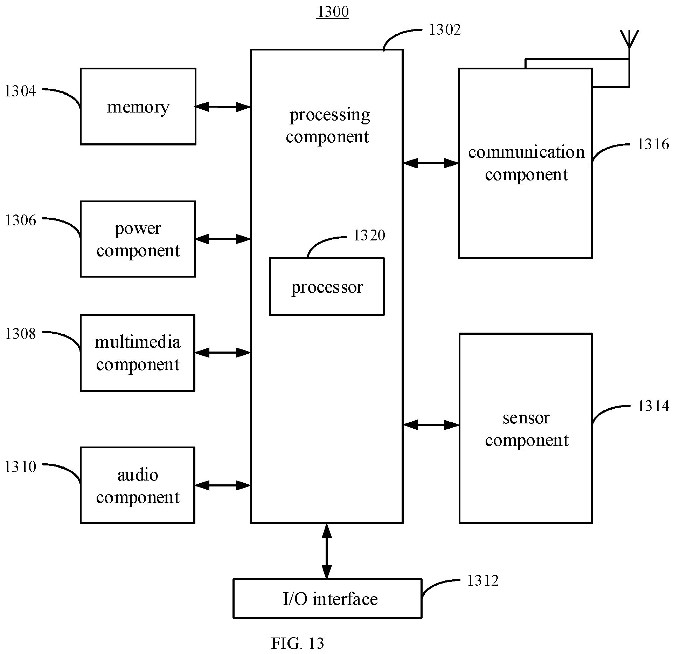

FIG. 13 is a schematic block diagram of another apparatus 1300 for information configuration according to embodiments of the present disclosure. For example, the apparatus 1300 may be a mobile phone, computer, digital broadcast terminal, messaging device, game console, tablet device, medical device, fitness device, personal digital assistant, and the like.

Referring to FIG. 13, the apparatus 1300 may include at least one of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communications, camera operations, and recording operations. The processing component 1302 may include at least one processor 1320 to execute instructions to perform all or part of the steps in the above described method. Moreover, the processing component 1302 may include at least one module which facilitates the interaction between the processing component 1302 and other components. For example, the processing component 1302 may include a multimedia module to facilitate the interaction between the multimedia component 1308 and the processing component 1302.

The memory 1304 is configured to store various types of data to support the operation of the apparatus 1300. Examples of such data include instructions for any applications or methods operated on the apparatus 1300, contact data, phonebook data, messages, pictures, video, etc. The memory 1304 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 1306 provides power to various components of the apparatus 1300. The power component 1306 may include a power management system, at least one power source, and any other components associated with the generation, management, and distribution of power in the apparatus 1300.

The multimedia component 1308 includes a screen providing an output interface between the apparatus 1300 and the user. In some embodiments, the screen may include a Liquid Crystal Display (LCD) and a Touch Panel (TP). In a case that the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front-facing camera and/or a rear-facing camera. When the apparatus 1300 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1310 is configured to output and/or input audio signals. For example, the audio component 1310 includes a microphone (MIC) configured to receive an external audio signal when the apparatus 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keypad of the apparatus 1300, a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the apparatus 1300 and other devices. The apparatus 1300 can access a wireless network based on a communication standard, such as WiFi, 2G or 3G, 4G LTE, 5G NR or a combination thereof. In an exemplary embodiment, the communication component 1316 receives a broadcast signal or broadcast associated information from an external broadcast management system via a broadcast channel. In an embodiment, the communication component 1316 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the apparatus 1300 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method of any embodiment.

In exemplary embodiments, there is also provided a non-transitory computer readable storage medium including instructions, such as included in the memory 1304, executable by the processor 1320 in the apparatus 1300, for performing the above described methods. For example, the non-transitory computer-readable storage medium may be a ROM, a RAM, a CD-ROM, a magnetic tape, a floppy disc, an optical data storage device, and the like.

Other implementations of the present disclosure will be readily apparent to those skilled in the art from consideration of the specification and practice of the disclosure disclosed herein. The present disclosure is intended to cover any modification, use or adaptation of the invention, these modifications, uses or adaptations follow the general principle of the invention and include common knowledge or conventional technical means in the technical field not disclosed in the present disclosure. The specification and embodiments are to be considered exemplary only, with a true scope and spirit of the disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

It should be noted that relational terms such as "first" and "second" are used herein to distinguish one entity or operation from another entity or operation without necessarily requiring or implying any such actual relationship or order between such entities or operations. And, the terms "comprise", "include" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprise a" do not preclude the presence of additional same elements in the process, method, article, or apparatus that includes the elements.

The methods and apparatuses provided by the embodiments of the present disclosure have been described above in detail. Herein, specific examples have been used to illustrate the principles and implementation methods of the present disclosure. The descriptions of the above embodiments are only used to help understand the methods and core idea disclosed in the present disclosure. At the same time, for those of ordinary skill in the art, according to the idea of the present disclosure, there will be changes in the specific implementation and application scope. In summary, the content of the specification should not be understood as a limitation to the present disclosure.

## Claims

1. A method for information configuration, performed by a terminal, comprising:
obtaining configuration information; and
updating beam information in a configured grant physical uplink shared channel CG PUSCH configuration according to the configuration information.

2. The method according to claim 1, wherein obtaining the configuration information comprises:
receiving configuration information sent by a base station.

3. The method according to claim 2, wherein the configuration information comprises indication information configured to indicate beam information for uplink transmission in at least one transmit receive point TRP direction.

4. The method according to claim 3, wherein the configuration information is carried by at least one of:
group common downlink control information GC DCI, or medium access control-control element MAC-CE.

5. The method according to claim 4, wherein in a case that the configuration information is carried by the GC DCI, the GC DCI independently indicates the configuration information through one information indication field, or jointly indicates the configuration information through codepoint information of one or more information indication fields.

6. The method according to claim 3, wherein updating the beam information in the configured grant physical uplink shared channel CG PUSCH configuration according to the configuration information comprises:
determining at least one sounding reference signal resource indicator SRI corresponding to the configuration information; and
determining beam information corresponding to the SRI as updated beam information.

7. The method according to claim 1, wherein obtaining the configuration information comprises:
determining the configuration information according to beam information sent or received by the terminal.

8. The method according to claim 7, wherein determining the configuration information according to the beam information sent or received by the terminal comprises:
in response to receiving update indication information configured by a base station, determining the configuration information according to the beam information sent or received by the terminal.

9. The method according to claim 7, wherein the beam information sent or received by the terminal comprises at least one of:
configured beam information for scheduling transmission;
configured beam information for an uplink channel for scheduling-free transmission;
measured and reported beam information for coordinated transmission; or
beam information in at least one CG PUSCH configuration that the base station has configured for the terminal, wherein each CG PUSCH configuration comprises at least one beam information.

10. The method according to claim 9, wherein the beam information sent or received by the terminal comprises the configured beam information for scheduling transmission;
in a case that the terminal has a beam consistency capability, the configured beam information for scheduling transmission comprises at least one of beam information for uplink transmission or beam information for downlink transmission;
or,
in a case that the terminal does not have the beam consistency capability, the configured beam information for scheduling transmission only comprises beam information for uplink transmission.

11. The method according to claim 9, wherein updating the beam information in the configured grant physical uplink shared channel CG PUSCH configuration according to the configuration information, comprises:
determining, from the sent or received beam information, at least one uplink beam corresponding to at least one latest transmission as updated beam information, wherein the beam information sent or received by the terminal comprises at least one of the configured beam information for scheduling transmission or the configured beam information for the uplink channel for scheduling-free transmission.

12. The method according to claim 9, wherein updating the beam information in the configured grant physical uplink shared channel CG PUSCH configuration according to the configuration information, comprises:
selecting and determining at least one piece of beam information from the beam information as updated beam information, wherein the beam information sent or received by the terminal comprises the measured and reported beam information for coordinated transmission.

13. The method according to claim 9, wherein updating the beam information in the configured grant physical uplink shared channel CG PUSCH configuration according to the configuration information, comprises:
selecting one or more CG PUSCH configurations from the at least one CG PUSCH configuration; and
determining the selected CG PUSCH configuration as a CG PUSCH configuration actually used in the terminal, and determining beam information in the selected CG PUSCH configuration as updated beam information, wherein beam indication information sent or received by the terminal comprises the beam information in the at least one CG PUSCH configuration that the base station has configured for the terminal.

14. The method according to claim 13, further comprising:
selecting at least one CG PUSCH configuration from the at least one CG PUSCH configuration; and
determining the selected CG PUSCH configuration as the CG PUSCH configuration actually used in the terminal.

15. The method according to claim 13 or 14, wherein, in the CG PUSCH configuration, beam information is different, and other transmission parameter configurations are the same.

16. The method according to any one of claims 13 -14, further comprising:
sending the selected or updated one or more CG PUSCH configurations or corresponding beam information to the base station.

17. A method for information configuration, performed by a base station, comprising:
sending configuration information to a terminal; wherein the configuration information is used for the terminal to update beam information in a configured grant physical uplink shared channel CG PUSCH configuration.

18. The method according to claim 17, wherein the configuration information comprises indication information configured to indicate beam information for uplink transmission in at least one TRP direction.

19. The method according to claim 18, wherein the configuration information is carried by at least one of:
downlink control information DCI, or medium access control-control element MAC-CE.

20. The method according to claim 18, wherein the configuration information corresponds to at least one sounding reference signal resource indicator SRI;
wherein the SRI is used for the terminal to determine beam information corresponding to the SRI as updated beam information.

21. An apparatus for information configuration, comprising:
an information obtaining module, configured to obtain configuration information; and
an information configuration module, configured to update beam information in a configured grant physical uplink shared channel CG PUSCH configuration according to the configuration information.

22. An apparatus for information configuration, comprising:
an information sending module, configured to send configuration information to a terminal; wherein the configuration information is used for the terminal to update beam information in a configured grant physical uplink shared channel CG PUSCH configuration.

23. An electronic device, comprising:
a processor;
a memory configured to store processor-executable instructions;
wherein the processor is configured to implement the method for information configuration according to any one of claims 1 to 20.

24. A computer-readable storage medium, having a computer program stored thereon, wherein, when the program is executed by a processor, steps in the method for information configuration according to any one of claims 1 to 20 are implemented.
